# EUROPÄISCHE PATENTSCHRIFT

(11) **EP 2 917 165 B1**
(45) Veröffentlichungstag und Bekanntmachung des Hinweises auf die Patenterteilung: **27.04.2022**
(21) Anmeldenummer: 13785403.0
(22) Anmeldetag: 28.10.2013
(51) Int. Cl.: C04B 37/00, C22C 16/00, C22C 14/00, B23K 35/32, G01L 9/00, B23K 35/40

(54) **BAUGRUPPE MIT ZWEI MITEINANDER GEFÜGTEN KERAMIKKÖRPERN, INSBESONDERE DRUCKMESSZELLE, UND VERFAHREN ZUM FÜGEN VON KERAMIKKÖRPERN MITTELS EINES AKTIVHARTLOTS**
ASSEMBLY COMPRISING TWO CERAMIC BODIES JOINED TO ONE ANOTHER, IN PARTICULAR A PRESSURE MEASURING CELL, AND METHOD FOR JOINING CERAMIC BODIES BY MEANS OF AN ACTIVE HARD SOLDER
SOUS-ENSEMBLE COMPRENANT DEUX CORPS EN CÉRAMIQUE ASSEMBLÉS, EN PARTICULIER UNE CELLULE DYNAMOMÉTRIQUE, ET PROCÉDÉ D'ASSEMBLAGE DE CORPS EN CÉRAMIQUE AU MOYEN D'UN MÉTAL D'APPORT ACTIF POUR BRASAGE FORT

(30) Priorität: 06.11.2012 DE 102012110618
(43) Veröffentlichungstag der Anmeldung: 16.09.2015
(73) Patentinhaber: Endress+Hauser SE+Co. KG, 79689 Maulburg (DE); Friedrich-Schiller-Universität Jena, 07743 Jena (DE)
(72) Erfinder: ROßBERG, Andreas, 79713 Bad Säckingen (DE); SCHMIDT, Elke, 79713 Bad Säckingen (DE); RETTENMAYR, Markus, 07749 Jena (DE); SIEGMUND, Peter, 07749 Jena (DE)
(74) Vertreter: Andres, Angelika Maria
(86) Internationale Anmeldenummer: PCT/EP2013/072475
(87) Internationale Veröffentlichungsnummer: WO 2014/072193

(56) Entgegenhaltungen:
- EP-A2- 0 490 807
- WO-A1-2011/072959
- WO-A1-2012/055989
- WO-A1-2012/079939
- US-A1- 2011 211 987

## Beschreibung

Die vorliegende Erfindung betrifft eine Baugruppe, welche mindestens zwei miteinander gefügte Keramikkörper aufweist, insbesondere eine Druckmesszelle, sowie ein Verfahren zum Fügen von Keramikkörpern mittels eines Aktivhartlots.

Aufgrund der besonderen Relevanz der Erfindung für Druckmesszellen wird die Problemstellung der Erfindung zunächst anhand von Druckmesszellen erläutert.

Druckmesszellen nach dem Stand der Technik weisen eine keramische Messmembran und einen keramischen Gegenkörper auf, wobei die Messmembran mit dem Gegenkörper entlang einer umlaufenden Fügestelle, welche ein Aktivhartlot aufweist, druckdicht verbunden ist, wobei zwischen der Messmembran und dem Gegenkörper eine Druckkammer gebildet ist, wobei sich die Gleichgewichtslage der Messmembran aus der Differenz zwischen einem in der Druckkammer herrschenden Druck und einem auf die der Druckkammer abgewandten Außenseite der Messmembran einwirkenden Druck ergibt.

Als Material für den Gegenkörper und die Messmembran sind insbesondere Aluminiumoxidkeramiken im Einsatz, welche sich aufgrund ihrer elastischen Eigenschaften und ihrer Medienbeständigkeit zur Herstellung von Druckmesszellen eignen. Die genannten Keramikkomponenten werden insbesondere mit einem Aktivhartlot gefügt, welches bevorzugt ein Zr-Ni-Ti-haltiges Aktivhartlot ist. Die Herstellung eines solchen Aktivhartlots ist beispielsweise in der europäischen Offenlegungsschrift EP 0 490 807 A2 offenbart. Nach dem in der Offenlegungsschrift beschriebenen Verfahren lassen sich insbesondere Ringe aus dem Aktivhartlotmaterial herstellen, welche zwischen Messmembran und Gegenkörper zu positionieren sind, um diese miteinander zu verlöten.

Zum Fügen der Bauteile werden beispielsweise die Keramikkörper mit einem zwischenliegenden Lotformteil im Hochvakuum auf eine Temperatur erwärmt, welche das Aufschmelzen des Aktivhartlots ermöglicht, so dass eine Reaktion zwischen dem Aktivhartlot und den Keramikkörpern einsetzt Durch Abkühlen erstarrt das Aktivhartlot, und die Reaktion zwischen dem Aktivhartlot und dem Keramikkörper wird gestoppt.

Das in der Veröffentlichung WO 2011/072959 A1 offenbarte keramische Produkt umfasst ein erstes Keramikteil und ein zweites Keramikteil, die über eine Aktivhartlot-Fügestelle verbunden sind, wobei die Fügestelle eine inhomogene Verteilung der Komponenten das Aktivhartlots aufweist, wobei zumindest an einer Grenzfläche zwischen dem Aktivhartlot und der Keramik die mindestens aktive Komponente des Aktivhartlots angereichert ist.

Die Veröffentlichung WO 2012/055989 A1 offenbart ein Fügeverfahren zwei Keramikteilen mittels eines Aktivhartlotmaterials, das auf zumindest einem der Keramikteile mittels einer Gasphasenabscheidung bereitgestellt wird beschichtet wird.

Die Veröffentlichung WO 2012/079939 A1 offenbart ein Fügeverfahren von keramischen Teilen mittels Aktivhartlot wobei auf den Fügeflächen der Fügepartner jeweils eine Aktivhartlotschicht aufgebracht wird und ein Zwischenring zwischen denAktivhartlotschichten positioniert wird, der beim anschließenden Lötprozess nicht aufschmilzt

Beim Abkühlen können jedoch unterschiedliche Wärmeausdehnungskoeffizienten des Materials der Keramikkörper einerseits und des Aktivhartlots andererseits zu erheblichen Spannungen zwischen den keramischen Komponenten und der Fügestelle führen, denn immerhin erfolgt nach dem Erstarren des Lots noch eine Abkühlung um einige hundert K.

Bei der Auswahl eines Aktivhartlots mit einem zum keramischen Werkstoff passenden Wärmeausdehnungskoeffizienten ist jedoch zu beachten, dass das passende Aktivhartlot nicht einen zu hohen Schmelzpunkt aufweist und insofern nicht zum Fügen der keramischen Komponenten geeignet ist, beispielsweise weil Elektroden, die auf den Keramikkörpern präpariert sind, diesen Temperaturen nicht standhalten.

Es ist daher die Aufgabe der Erfindung, eine Baugruppe und eine Druckmesszelle sowie ein Herstellungsverfahren dafür bereitzustellen, wodurch die genannten Nachteile des Stands der Technik überwunden werden.

Die Aufgabe wird erfindungsgemäß gelöst durch die Baugruppe gemäß dem unabhängigen Patentanspruch 1, die Druckmesszelle gemäß dem Patentanspruch 7 und das Verfahren gemäß dem unabhängigen Patentanspruch 8.

Die erfindungsgemäße Baugruppe umfasst einen ersten Keramikkörper und einen zweiten Keramikkörper, wobei der erste Keramikkörper und der zweite Keramikkörper mittels einer Fügestelle verbunden sind, wobei die Fügestelle ein Aktivhartlot aufweist,
wobei der erste Keramikkörper (1) und / oder der zweite Keramikkörper (2) Al₂O₃ aufweisen,
wobei das Aktivhartlot Zr, Ni und Ti aufweist,
wobei das Aktivhartlot, gemittelt über ein zusammenhängendes Kernvolumen, das von dem ersten Keramikkörper und von dem zweiten Keramikkörper jeweils mindestens 1 µm, insbesondere mindestens 2 µm beabstandet ist, eine mittlere Komposition C_{K} mit einer Liquidustemperatur T_{I}(C_{K}) aufweist,
wobei die Komposition G_{K} einen Wärmeausdehnungskoeffizienten α(C_{K}) aufweist, für den gilt: α(C_{K}) = m · α(K), wobei m ≤ 1,5, insbesondere m ≤ 1,3 und bevorzugt m ≤ 1,2, wobei α(K) der mittlere Wärmeausdehnungskoeffizient des keramischen Werkstoffs bzw. der keramischen Werkstoffe des ersten und zweiten Keramikkörpers ist,
wobei die Fügestelle eine erste Grenzschicht und eine zweite Grenzschicht aufweist,
die an den ersten Keramikkörper bzw. zweiten Keramikkörper grenzen,
wobei erfindungsgemäß mindestens eine der Grenzschichten, die außerhalb des Kernvolumens liegt, eine mittlere Komposition C_{G} mit einer Liquidustemperatur T_{I}(C_{G}) aufweist, die nicht weniger als 200 K unter der Liquidustemperatur T_{I}(C_{K}) der mittleren Komposition C_{K} des Kernvolumens liegt.

In einer Weiterbildung der Erfindung weist die mindestens eine Grenzschicht eine Stärke von nicht mehr als 3 µm, insbesondere nicht mehr als 2 µm und bevorzugt nicht mehr als 1 µm auf.

In einer Weiterbildung der Erfindung weisen mindestens 40%, vorzugsweise mindestens 60% und besonders bevorzugt mindestens 70% des Volumens der Fügestelle die Komposition C_{K} auf

In einer Weiterbildung der Erfindung weist die Komposition der Grenzschicht C_{G} eine Liquidustemperatur T_{I}(C_{G}) auf, die nicht mehr als 300 K, vorzugsweise nicht mehr als 150 K, und bevorzugt nicht mehr als 50 K oberhalb der Liquidustemperatur T_{I}(Cₑ) des eutektischen Punktes bzw. des nächsten Schnittpunks mit einer eutektischen Rinne mit einer Komposition Cₑ im Kompositionsraum liegt, wobei Cₑ := (cₑ₁, ... ,c_{eN}), wobei |Cₑ| = 1, wobei die cₑᵢ der stöchiometrische Anteil der Komponenten Kᵢ mit i = 1, ..., N am eutektischen Punkt bzw. am nächsten Schnittpunkt mit einer eutektischen Rinne sind, wobei C_{G} := (c_{G1}, ... ,c_{GN}), wobei |C_{G}| = 1, und wobei die C_{Gi} die stöchiometrischen Anteile der Komponenten Kᵢ i = 1, ..., N der mittleren Komposition des Aktivhartlots in der Grenzschicht sind.

In einer Weiterbildung der Erfindung gilt:
Cₑ := (cₑ₁, ... ,c_{eN}), wobei |Cₑ| = 1, wobei die cₑₗ die stöchiometrischen Anteile der Komponenten Kᵢ mit i = 1, ..., N am eutektischen Punkt bzw. am nächsten Schnittpunkt mit einer eutektischen Rinne sind;
C_{K} := (c_{K1}, ... ,c_{KN}), wobei |C_{K}| = 1, und wobei die c_{Ki} die stöchiometrischen Anteile der Komponenten Kᵢ, mit i = 1, ..., N der mittleren Komposition des Aktivhartlots im Kernvolumen sind; und
C_{G} := (c_{G1}, ... ,c_{GN}), wobei |C_{G}| = 1, und wobei die c_{Gi} die stöchiometrischen Anteile der Komponenten K_{I} i i = 1, ..., N der mittleren Komposition des Aktivhartlots in der Grenzschicht sind,
wobei die Differenz zwischen der Komposition Cₑ und der Komposition C_{G} mit einem normierten Differenzvektor D_{eG} beschreibbar ist,
wobei gilt Cₑ = C_{G} + a_{eG} * D_{eG}, mit |D_{eG}|=1,
wobei die Differenz zwischen der Komposition C_{K} und der Komposition C_{G} mit einem normierten Differenzvektor D_{KG} beschreibbar ist,
wobei gilt C_{K} = C_{G} + a_{KG} * D_{KG}, mit |D_{KG}|=1,
wobei a_{eG} und a_{KG} positive Skalare sind,
wobei für das Skalarprodukt s_{eK} : = D_{eG} · D_{KG} gilt:
   s_{eK} < 0, insbesondere s_{eK} < -0,5, bevorzugt s_{eK} < - 0,8.

Gemäß einer Weiterbildung der Erfindung enthält die Komposition C_{K}, im wesentlichen Zirkon und Titan, mit (50+x) Atom-% Titan und (50-x) Atom-% Zirkon, wobei x < 10 insbesondere x <5, wobei die Komposition C_{K} insbesondere in der α-(Zr, Ti)-Phase vorliegt.

Gemäß einer Weiterbildung der Erfindung weist die Komposition C_{K} einen Wärmeausdehnungskoeffizienten α(C_{K}) auf, für den gilt α(C_{K}) ≤ 10 · 10⁻⁶/K, insbesondere α(C_{K}) ≤ 9,5 · 10⁻⁶/K, vorzugweise α(C_{K}) ≤ 9,2 · 10⁻⁶/K.

Gemäß einer Weiterbildung der Erfindung weist die Grenzschicht eine Komposition C_{G} auf, die etwa 42 bis 52 Atom-% Zr, 23 bis 28 Atom-% Ni und 24 bis 30 Atom-% Ti aufweist, wobei ggf. Al eindiffundiert ist, wobei in dem Maße, wie Al vorliegt, insbesondere der Titananteil reduziert ist.

Die erfindungsgemäße Druckmesszelle umfasst eine erfindungsgemäße Baugruppe, wobei der erste Keramikkörper einen Membrankörper einer Messmembran der Druckmesszelle bildet, wobei der zweite Keramikkörper einen Gegenkörper der Druckmesszelle bildet, und wobei der Gegenkörper und der Membrankörper mittels der Fügestelle, welche ringförmig ausgebildet ist, druckdicht miteinander gefügt sind.

Das erfindungsgemäße Verfahren zum Herstellen einer Baugruppe, die einen ersten Keramikkörper und einen zweiten Keramikkörper aufweist, wobei der erste Keramikkörper und der zweite Keramikkörper mittels eines Aktivhartlots durch das Verfahren zu verbinden sind, wobei der erste Keramikkörper und / oder der zweite Keramikkörper Al₂O₃ aufweisen, und wobei das Aktivhartlot Zr, Ni und Ti aufweist, weist die folgenden Schritte auf:
Bereitstellen des Aktivhartlots zwischen den Keramikkörpern, wobei das Aktivhartlot gemittelt über ein zusammenhängendes Kernvolumen eine mittlere Komposition C_{K0} mit einer Liquidustemperatur T_{I}(C_{K0}) aufweist,
wobei die Komposition C_{K} einen Wärmeausdehnungskoeffizienten α(C_{K}) aufweist, für den gilt α(C_{K}) = m · a(K), wobei m ≤ 1,5, insbesondere m ≤ 1,3 und bevorzugt m ≤ 1,2, wobei α(K) der mittlere Wärmeausdehnungskoeffizient des keramischen Werkstoffs bzw. der keramischen Werkstoffe des ersten und zweiten Keramikkörpers ist,
wobei das Aktivhartlot auf zumindest einer der Oberflächen, die dem Keramikkörper zugewandt sind, eine Grenzschicht mit einer mittleren Komposition C_{G0} aufweist, wobei die Komposition C_{G0} eine Liquidustemperatur T_{I}(C_{G0}) aufweist, die nicht weniger als 200 K unter der Liquidustemperatur T_{I}(C_{K0}) der mittleren Komposition C_{K0} des Kernvolumens liegt; und
Erhitzen der Keramikkörper und des Aktivhartlots in einem Vakuumlötprozess bis zum Schmelzen der Komposition C_{G0}, wobei die Schmelze der Grenzschicht sich im Übergang zum Kernbereich mit dem Material des Kernbereichs vermischt, wodurch die Liquidustemperatur der Grenzschicht erhöht wird, so dass die Grenzschicht zumindest teilweise isotherm erstarrt oder höherviskos wird.

Die Kompositionen des Kernvolumens C_{K0} und der Grenzschicht C_{K0} sind zweckmäßig durch Vektoren beschreibbar, wobei C_{K0} := (c_{K01}, ... ,c_{K0N}), wobei |C_{K0}| = 1, und wobei die c_{Ki} die stöchiometrischen Anteile der Komponenten Kᵢ i = 1, ..., N der mittleren Komposition des Aktivhartlots im Kernvolumen sind, wobei C_{G0} := (c_{G01}, ... ,c_{G0N}), wobei |C_{G0}| = 1, und wobei die c_{G0i} die stöchiometrischen Anteile der Komponenten Kᵢ i = 1, ..., N der mittleren Komposition des Aktivhartlots in der Grenzschicht sind.

In einer Weiterbildung des Verfahrens umfasst das Bereitstellen des Aktivhartlots, dass ein Lotformteil, welches die Komposition C_{K0} aufweist, mittels Gasphasenabscheidung, beispielsweise durch Sputtern, mindestens auf einer Oberfläche, vorzugsweise auf zwei gegenüberliegenden Oberflächen mit einer Grenzschicht beschichtet wird, welche die Komposition C_{G0} aufweist.

In einer Weiterbildung des Verfahrens umfasst das Bereitstellen des Aktivhartlots, dass mindestens ein Oberflächenabschnitt eines Keramikkörpers, insbesondere zwei gegenüberliegende Oberflächenabschnitte der beiden Keramikkörper mit jeweils einer Grenzschicht beschichtet wird bzw. werden, welche die Komposition C_{G0} aufweist, wobei die Beschichtung beispielsweise durch Gasphasenabscheidung, insbesondere Sputtern erfolgt. In einer Ausgestaltung dieser Weiterbildung des Verfahrens wird zwischen den mit der Grenzschicht versehenen Keramikkörper ein Lotformteil angeordnet, welches ein Kernvolumen mit der Komposition C_{K0} aufweist, und welches ggf. mit einer Grenzschicht der Komposition C_{G0} beschichtet ist.

Gemäß einer Weiterbildung der Erfindung enthält die Komposition C_{K}, im wesentlichen Zirkonium und Titan, mit (50+x) Atom-% Titan und (50-x) Atom-% Zirkon, wobei x < 10 insbesondere x <5, wobei die Komposition C_{K0} insbesondere in der α-(Zr, Ti)-Phase vorliegt.

in einer Weiterbildung des Verfahrens weist die Komposition C_{G0} etwa 42 bis 52 Atom-% Zr, 23 bis 28 Atom-% Ni und 24 bis 30 Atom-% Ti auf, beispielsweise 45 bis 49 Atom-% Zr, 24,5 bis 27 Atom-% Ni und 26 bis 29,5 Atom-% Ti, und vorzugsweise 47 Atom-% Zr, 26 Atom-% Ni und 27 Atom-% Ti.

Die Erfindung wird nun anhand des in den Zeichnungen dargestellten Ausführungsbeispiels erläutert, es zeigt:
- Fig. 1:: Ein vereinfachtes Diagramm für das ternäre System Ni-Ti-Zr;
- Fig. 2:: einen Teillängsschnitt durch eine erfindungsgemäße Druckmesszelle;

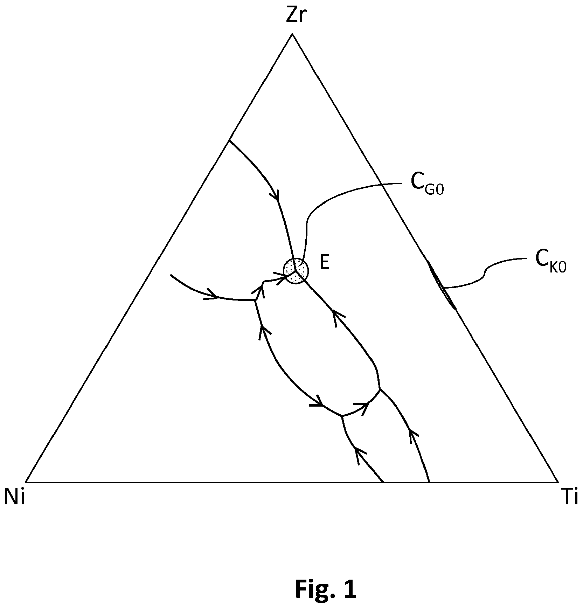

Das in Fig. 1 dargestellte Diagramm für ein ternäres metallisches System, nämlich das Ni-Ti-Zr-System, ist auf Daten von Gupta (Journal of Phase Equilibria, 20(4), Seiten 441 - 448, August 1999) gestützt. Es zeigt die Lage des eutektischen Punkts E und einiger eutektischer Rinnen. Die Pfeile in den eutektischen Rinnen deuten jeweils in Richtung einer niedrigeren Liquidustemperatur.

Erfindungsgemäß wird ein Kernvolumen eines Aktivhartlots, das für die mechanischen Eigenschaften einer damit zu bildenden Fügestelle bestimmend ist, mit einer Komposition C_{K0} beispielsweise eines Lotformteils bereitgestellt, wobei die Oberflächen des Kernvolumens mit einer Grenzschicht einer Komposition C_{G0} beschichtet werden, wobei die letztgenannte Komposition einen deutlich tieferen Schmelzpunkt aufweist als die Komposition des Kernvolumens.

Die Komposition C_{K0} des Kernvolumens ist vorzugsweise so gewählt, dass der Wärmeausdehnungskoeffizient der Komposition möglichst wenig von dem Wärmeausdehnungskoeffizienten des keramischen Werkstoffs der zu fügenden Keramikkörper abweicht. Zu verschiedenen Kompositionen wurde der

Wärmeausdehnungskoeffizient ermittelt. Hierbei erwiesen sich Kompositionen von Zirkonium und Titan mit (50+x) Atom-% Titan und (50-x) Atom-% Zirkonium, wobei x < 10 insbesondere x <5, insbesondere in der α-(Zr, Ti)-Phase als Komposition des Kernvolumens C_{K0} für das Fügen von Korund besonders geeignet. Die Wärmeausdehnungskoeffizienten α(C_{K}) gilt: α(C_{K}) ≤ 9,5 · 10⁻⁶/K, insbesondere α(C_{K}) ≤ 9,2 - 10⁻⁶/K.

Wie in Fig. 1 dargestellt, kann die Komposition C_{G0} der Grenzschicht am eutektischen Punkt oder nahe dem eutektischen Punkt gewählt sein, wie durch die entsprechend bezeichnete Fläche in Fig. 1 dargestellt ist. Eine geeignete Komposition C_{G0} umfasst beispielsweise 47 Atom-% Zr, 26 Atom-% Ni und 27 Atom-% Ti. Die zugehörige Liquidustemperatur beträgt etwa 770 °C.

Die Liquidustemperatur einer Komposition C_{K0} des Kernvolumens mit 55 Atom-% Ti und 45 Atom-% Zr beträgt dagegen mehr als 1200 °C.

Dem entsprechend kann die Grenzschicht beispielsweise bei einer Löttemperatur von 800 °C bis 850 °C zuverlässig aufgeschmolzen werden, ohne dass das Kernvolumen des Aktivhartlots aufgeschmolzen wird.

Damit kann die feinkristalline bzw. amorphe Struktur des Kernvolumens beim Löten erhalten werden. Lediglich an der Grenzfläche zwischen der Grenzschicht und dem Kernvolumen wird es ggf. zu einem Austausch zwischen dem Kernvolumen und der Grenzschicht kommen, so dass die Grenzschicht abschnittsweise einen Anstieg der Liquidustemperatur erfährt, was je nach der gewählten Löttemperatur bewirkt, dass Bereiche der Grenzschicht isotherm zäher werden oder erstarren. Jedenfalls wird aber die Struktur des Kemvolumens kaum verändert.

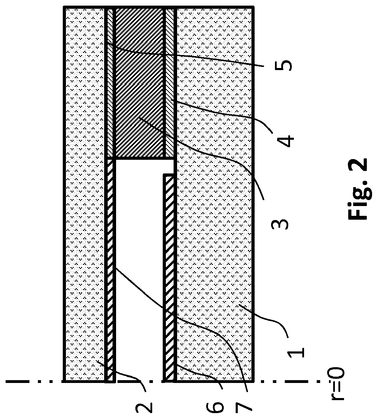

Nach dem geschilderten Prinzip werden nun die Komponenten einer Druckmesszelle gefügt, deren Anordnung vor dem Fügen in Fig. 2 dargestellt ist. Die Druckmesszelle umfasst einen keramischen Gegenkörper 1 und eine Messmembran 2, die Aluminiumoxid aufweisen. Die Messmembran 2 und der Gegenkörper sind mittels eines Aktivhartlots zu fügen, wobei das Aktivhartlot als ringförmiges Lotformteil 3 mit einer Stärke von beispielsweise 20 µm bereitgestellt wird, wobei auf beiden Stirnseiten des Lotformteils 3 eine Grenzschicht 4, 5 in einer Stärke von 1 µm bis 2 µm aufgesputtert ist.

Das Lotformteil weist die oben beschriebene Komposition C_{K0} des Kernvolumen auf. Die Grenzschicht weist dagegen eine Komposition C_{G0} auf, die nahe am eutektischen Punkt E liegt.

Durch Löten im Hochvakuum bei beispielsweise 850°C reagieren die Grenzschichten 4, 5 mit dem Gegenkörper und der Messmembran 1, 2, so dass eine Fügestelle ausgebildet wird, wobei das Kernvolumen des Aktivhartlots nicht aufschmilzt und in seiner amorphen Struktur im Wesentlichen erhalten bleibt. Die Messmembran und der Grundkörper weisen weiterhin jeweils eine Elektrode 7, 6 eines kapazitiven Wandlers auf, wobei die Elektroden beispielsweise durch Abscheiden von Ni präpariert sein können.

## Patentansprüche

1. Baugruppe, umfassend: einen ersten Keramikkörper (1) und einen zweiten Keramikkörper (2), wobei der erste Keramikkörper (1) und der zweite Keramikkörper (2) mittels einer Fügestelle verbunden sind, wobei die Fügestelle ein Aktivhartlot aufweist,
wobei der erste Keramikkörper (1) und / oder der zweite Keramikkörper (2) Al₂O₃ aufweisen,
wobei das Aktivhartlot Zr, Ni und Ti aufweist,
wobei das Aktivhartlot, gemittelt über ein zusammenhängendes Kernvolumen, das von dem ersten Keramikkörper (1) und von dem zweiten Keramikkörper (2) jeweils mindestens 1 µm, insbesondere mindestens 2 µm beabstandet ist, eine mittlere Komposition C_{K} mit einer Liquidustemperatur Tᵢ(C_{K}) aufweist,
wobei insbesondere Cₖ := (c_{K1}, ... ,c_{KN}), wobei |C_{K}| = 1, und wobei die c_{Kl} die stöchiometrischen Anteile der Komponenten Kᵢ i = 1, ..., N der mittleren Komposition des Aktivhartlots im Kernvolumen sind,
wobei die Komposition C_{K} einen Wärmeausdehnungskoeffizienten α(C_{K}) aufweist, für den gilt α(C_{K}) = m · a(K), wobei m ≤ 1,5, insbesondere m ≤ 1,3 und bevorzugt m ≤ 1,2, wobei α(K) der mittlere Wärmeausdehnungskoeffizient des keramischen Werkstoffs bzw. der keramischen Werkstoffe des ersten und zweiten Keramikkörpers ist,
wobei die Komposition C_{K}, im wesentlichen Zirkonium und Titan enthält, mit (50+x) Atom-% Titan und (50-x) Atom-% Zirkonium, wobei x < 10, insbesondere x <5, wobei die Komposition C_{K} in der α-(Zr, Ti)-Phase vorliegt,
wobei die Fügestelle eine erste Grenzschicht (4) und eine zweite Grenzschicht (5) aufweist, die an den ersten Keramikkörper bzw. zweiten Keramikkörper grenzen,
**dadurch gekennzeichnet, dass** mindestens eine der Grenzschichten, die außerhalb des Kernvolumens liegt, eine mittlere Komposition C_{G} mit einer Liquidustemperatur Tᵢ(C_{G}) aufweist, die nicht weniger als 200 K unter der Liquidustemperatur T_{I}(C_{K}) der mittleren Komposition C_{K} des Kernvolumens liegt,
wobei insbesondere C_{G} = (c_{G1}, ... ,c_{GN}), wobei |C_{G}| = 1, und wobei die c_{Gi} die stöchiometrischen Anteile der Komponenten K_{I} i = 1, ..., N der mittleren Komposition des Aktivhartlots in der Grenzschicht sind.

2. Baugruppe nach Anspruch 1, wobei die mindestens eine Grenzschicht eine Stärke von nicht mehr als 3 µm, insbesondere nicht mehr als 2 µm und bevorzugt nicht mehr als 1 µm aufweist.

3. Baugruppe nach einem der vorherigen Ansprüche, wobei die Komposition C_{G} eine Liquidustemperatur Tᵢ(C_{G}) aufweist, die nicht mehr als 300 K , vorzugsweise nicht mehr als 150 K, und bevorzugt nicht mehr als 50 K oberhalb der Liquidustemperatur Tᵢ(Cₑ) des eutektischen Punktes bzw. des nächsten Schnittpunks mit einer eutektischen Rinne mit einer Komposition Cₑ im Kompositionsraum liegt,
wobei Cₑ := (cₑ₁, ... ,c_{eN}), wobei |Cₑ| = 1, und wobei die cₑᵢ der stöchiometrische Anteil der Komponenten Kᵢ mit i = 1, ..., N am eutektischen Punkt bzw. ein nächster Schnittpunkt mit einer eutektischen Rinne ist.

4. Baugruppe nach einem der vorhergehenden Ansprüche, wobei die Legierung der Fügestelle am eutektischen Punkt bzw. am nächsten Schnittpunkt mit einer eutektischen Rinne im Kompositionsraum eine Komposition Cₑ aufweist,
wobei Cₑ := (cₑ₁, ... ,c_{eN}), wobei |Cₑ| = 1, wobei die cₑₗ die stöchiometrischen Anteile der Komponenten K_{I} mit i = 1, ..., N am eutektischen Punkt bzw. am nächsten Schnittpunkt mit einer eutektischen Rinne sind,
wobei die Differenz zwischen der Komposition Cₑ und der Komposition C_{G} mit einem normierten Differenzvektor D_{eG} beschreibbar ist,
wobei gilt: Cₑ = C_{G} + a_{eG} * D_{eG}, mit |D_{eG}|=1,
wobei die Differenz zwischen der Komposition C_{K} und der Komposition C_{G} mit einem normierten Differenzvektor D_{KG} beschreibbar ist,
wobei gilt: C_{K} = C_{G} + a_{KG} * D_{KG}, mit |D_{KG}|=1,
wobei a_{eG} und a_{KG} positive Skalare sind,
wobei für das Skalarprodukt s_{eK} : = D_{eG} · D_{KG} gilt:
s_{eK} < 0, insbesondere s_{eK} < -0,5, bevorzugt SeK < - 0,8.

5. Baugruppe nach einem der vorhergehenden Ansprüche, wobei die Komposition C_{K} einen Wärmeausdehnungskoeffizienten α(C_{K}) aufweist, für den gilt α(C_{K}) ≤ 10 · 10⁻⁶/K, insbesondere α(C_{K}) ≤ 9,5 · 10⁻⁶/K, vorzugweise α(C_{K}) ≤ 9,2 · 10⁻⁶/K.

6. Baugruppe nach einem der vorhergehenden Ansprüche, wobei die Grenzschicht (4, 5) eine Komposition C_{G} aufweist, die 42 bis 52 Atom-% Zr, 23 bis 28 Atom-% Ni und 24 bis 30 Atom-% Ti aufweist, wobei ggf. AI eindiffundiert ist ,wobei in dem Maße, wie AI vorliegt, insbesondere der Titananteil reduziert ist.

7. Druckmesszelle, umfassend eine Baugruppe nach einem der Ansprüche 1 bis 6, wobei der erste Keramikkörper einen Membrankörper einer Messmembran der Druckmesszelle bildet, wobei der zweite Keramikkörper einen Gegenkörper der Druckmesszelle bildet, und wobei der Gegenkörper und der Messmembran mittels der Fügestelle, welche ringförmig ausgebildet ist, druckdicht miteinander gefügt sind.

8. Verfahren zum Herstellen einer Baugruppe nach einem der Ansprüche 1-6, welche einen ersten Keramickörper und einen zweiten Keramikkörper aufweist, wobei der erste Keramickörper und der zweite Keramikkörper mittels eines Aktivhartlots durch das Verfahren zu verbinden sind, wobei der erste Keramikkörper (1) und /oder der zweite Keramikkörper (2) Al₂O₃ aufweisen, wobei das Aktivhartlot Zr, Ni und Ti aufweist, wobei das Verfahren die folgenden Schritte aufweist:
Bereitstellen des Aktivhartlots zwischen den Keramikkörpern, wobei das Aktivhartlot gemittelt über ein zusammenhängendes Kernvolumen eine mittlere Komposition C_{K0} mit einer Liquidustemperatur T_{I}(C_{K0}) aufweist, wobei C_{K0} := (C_{K01}, ... ,C_{K0N}), wobei |C_{K0}| = 1, und wobei die c_{Ki} die stöchiometrischen Anteile der Komponenten Kᵢ i = 1, ..., N der mittleren Komposition des Aktivhartlots im Kernvolumen sind, wobei die Komposition C_{K} einen Wärmeausdehnungskoeffizienten α(C_{K}) aufweist, für den gilt:
α(C_{K}) = m · a(K), wobei m ≤ 1,5, insbesondere m ≤ 1,3 und bevorzugt m ≤ 1,2, wobei α(K) der mittlere Wärmeausdehnungskoeffizient des keramischen Werkstoffs bzw. der keramischen Werkstoffe des ersten und zweiten Keramikkörpers ist,
wobei die Komposition C_{K} Zirkonium und Titan mit (50+x) Atom-% Titan und (50-x) Atom-% Zirkonium enthält, wobei x < 10 insbesondere x <5, wobei die Komposition C_{K} insbesondere in der α-(Zr, Ti)-Phase vorliegt,
wobei das Aktivhartlot auf zumindest einer der Oberflächen, die dem Keramikkörper zugewandt sind, eine Grenzschicht mit einer mittleren Komposition C_{G0} aufweist, wobei die Komposition C_{G0} eine Liquidustemperatur T_{I}(C_{G0}) aufweist, die nicht weniger als 200 K unter der Liquidustemperatur T_{I}(C_{K0}) der mittleren Komposition C_{K0} des Kernvolumens liegt, wobei insbesondere C_{G0} := (C_{G01}, ... ,C_{G0N}), wobei |C_{G0}| = 1, und wobei die c_{G0i} die stöchiometrischen Anteile der Komponenten Kᵢ i = 1, ..., N der mittleren Komposition des Aktivhartlots in der Grenzschicht sind; und
Erhitzen der Keramikkörper und des Aktivhartlots in einem Vakuumlötprozess bis zum Schmelzen der Komposition C_{G0}, wobei die Schmelze der Grenzschicht sich im Übergang zum Kernbereich mit dem Material der Grenzschicht vermischt, wodurch die Liquidustemperatur der Grenzschicht erhöht wird, so dass die Grenzschicht zumindest teilweise isotherm erstarrt oder höherviskos wird.

9. Verfahren nach Anspruch 8, wobei das Bereitstellen des Aktivhartlots umfasst, dass ein Lotformteil, welches die Komposition C_{K0} aufweist, mittels Gasphasenabscheidung, beispielsweise durch Sputtern, mindestens auf einer Oberfläche, vorzugsweise auf zwei gegenüberliegenden Oberflächen mit einer Grenzschicht beschichtet wird, welche die Komposition C_{G0} aufweist.

10. Verfahren nach Anspruch 8 oder 9, wobei das Bereitstellen des Aktivhartlots umfasst, dass mindestens ein Oberflächenabschnitt eines Keramikkörpers, insbesondere zwei einander gegenüberliegenden Oberflächenabschnitte der beiden Keramikkörper mit jeweils einer Grenzschicht beschichtet wird bzw. werden, welche die Komposition C_{G0} aufweisen, wobei die Beschichtung beispielsweise durch Gasphasenabscheidung, insbesondere Sputtern erfolgt.

11. Verfahren nach Anspruch 10, wobei zwischen den mit der Grenzschicht versehenen Keramikkörpern ein Lotformteil angeordnet wird, welches ein Kernvolumen mit der Komposition C_{K0} aufweist, und welches ggf. mit einer Grenzschicht der Komposition C_{G0} beschichtet ist.

12. Verfahren nach einem der Ansprüche 8 bis 11, wobei die Komposition C_{G0} 42 bis 52 Atom-% Zr, 23 bis 28 Atom-% Ni und 24 bis 30 Atom-% Ti aufweist, beispielsweise 45 bis 49 Atom-% Zr, 24,5 bis 27 Atom-% Ni und 26 bis 29,5 Atom-% Ti, und vorzugsweise 47 Atom-% Zr, 26 Atom-% Ni und 27 Atom-% Ti.

## Claims

1. Assembly, comprising: a first ceramic body (1) and a second ceramic body (2),
wherein the first ceramic body (1) and the second ceramic body (2) are connected by means of a joint, said joint comprising an active brazing solder,
wherein the first ceramic body (1) and/or the second ceramic body (2) comprise Al₂O₃,
wherein the active brazing solder comprises Zr, Ni and Ti,
wherein the active brazing solder - averaged over a continuous core volume which is at a distance from the first ceramic body (1) and from the second ceramic body (2) of at least 1 µm, particularly at least 2 µm - has an average composition C_{K} with a liquid temperature T_{I}(C_{K}),
wherein particularly C_{K}:= (c_{K1}, ..., c_{KN}), where ICKI = 1 and wherein c_{Ki} are the stoichiometric parts of the components Ki i = 1, ..., N of the average composition of the active brazing solder in the core volume,
wherein the composition C_{K} has a thermal expansion coefficient α(C_{K}), for which the following applies: α(C_{K}) = m · a(K), where m ≤ 1.5 particularly m ≤ 1.3 and preferably m ≤ 1.2, wherein α(K) is the average thermal expansion coefficient of the ceramic material or ceramic materials of the first and of the second ceramic body,
wherein the composition C_{K} essentially contains zirconium and titanium, with (50+x) atom % of titanium and (50-x) atom % of zirconium, wherein x < 10, particularly x < 5, wherein the composition C_{K} is present in the phase α-(Zr, Ti),
wherein the joint comprises a first limit layer (4) and a second limit layer (5), which are adjacent, respectively, to the first ceramic body and the second ceramic body,
**characterized in that** at least one of the limit layers that is located outside the core volume has an average composition C_{G} with a liquid temperature T_{I}(C_{G}) which is not less than 200 K below the liquid temperature T_{I}(C_{K}) of the average composition C_{K} of the core volume,
wherein particularly CG:= (c_{G1}, ..., ,c_{GN}), where ICGI = 1 and where the c_{Gi} are the stoichiometric parts of the components Ki i = 1, ..., N of the average composition of the active brazing solder in the limit layer.

2. Assembly as claimed in Claim 1, wherein the at least one limit layer has a thickness of not more than 3 µm, particularly not more than 2 µm and preferably not more than 1 µm.

3. Assembly as claimed in one of the previous claims, wherein the composition C_{G} has a liquid temperature T_{I}(C_{G}) which is not more than 300 K, preferably not more than 150 K, and particularly preferably not more than 50 K above the liquid temperature T_{I}(Cₑ) of the eutectic point or of the nearest point of intersection with a eutectic channel with a composition Cₑ in the composition zone,
wherein Ce:= (cₑ₁, ..., _{CeN}), where ICel = 1, and where cₑᵢ is the stoichiometric part of the components Ki with i = 1, ..., N at the eutectic point or at the next point of intersection with a eutectic channel.

4. Assembly as claimed in one of the previous claims, wherein the alloy of the joint has a composition Cₑ at the eutectic point or at the next point of intersection with a eutectic channel in the composition zone,
wherein Ce:= (cₑ₁, ..., _{CeN}), where ICel = 1 and where the cₑᵢ are the stoichiometric parts of the components Ki with i = 1, ..., N at the eutectic point or at the next point of intersection with a eutectic channel,
wherein the difference between the composition Cₑ and the composition C_{G} can be described with a normalized difference vector D_{eG},
where: Cₑ = C_{G} + a_{eG} * D_{eG}, with |D_{eG}| = 1,
wherein the difference between the composition C_{K} and the composition C_{G} can be described by a normalized difference vector D_{KG},
where: C_{K} = C_{G} + a_{KG} * D_{KG}, with |D_{KG}| = 1,
where a_{eG} and a_{KG} are positive scalars,
wherein the following applies for the scalar product s_{eK}:= D_{eG} • D_{KG}:
s_{eK} < 0, particularly s_{eK} < -0.5, preferably s_{eK} < -0.8.

5. Assembly as claimed in one of the previous claims, wherein the composition C_{K} has a thermal expansion coefficient α(C_{K}) such that α(C_{K}) ≤ 10 • 10⁻⁶/K, particularly α(C_{K}) ≤ 9.5 • 10⁻⁶/K, preferably α(C_{K}) ≤ 9.2 • 10⁻⁶/K.

6. Assembly as claimed in one of the previous claims, wherein the limit layer (4, 5) has a composition C_{G} which comprises 42 to 52 atom % of Zr, 23 to 28 atom % of Ni and 24 to 30 atom % of Ti, wherein AI may be diffused into the material, wherein the proportion of titanium is particularly reduced in proportion to the presence of AI.

7. Pressure measuring cell, comprising an assembly as claimed in one of the Claims 1 to 6,
wherein the first ceramic body forms a membrane body of a measuring membrane of the pressure measuring cell,
wherein the second ceramic body forms a counter-body of the pressure measuring cell, and
wherein the counter-body and the measuring membrane are joined together in a pressure-tight manner by the joint, which is annular in design.

8. Procedure for the production of an assembly as claimed in one of the Claims 1 to 6, wherein said assembly comprises a first ceramic body and a second ceramic body, wherein the first ceramic body and the second ceramic body are to be connected using the procedure by means of an active brazing solder, wherein the first ceramic body (1) and/or the second ceramic body (2) comprise Al₂O₃, wherein the active brazing solder comprises Zr, Ni and Ti, wherein said procedure comprises the following steps:
Provision of the active brazing solder between the ceramic bodies, wherein the active brazing solder - averaged over a continuous core volume - has an average composition C_{K0} with a liquid temperature T_{I}(C_{K0}), where CKO: = (cₖ₀₁, ..., c_{K0N}), where |C_{K0}| = 1 and where the c_{Ki} are the stoichiometric parts of the components Ki i = 1, ..., N of the average composition of the active brazing solder in the core volume, wherein the composition C_{K} has a thermal expansion coefficient α(C_{K}) such that:
α(C_{K}) = m • a(K), where m ≤ 1.5, particularly m ≤ 1.3 and preferably m ≤ 1.2, where α(K) is the average thermal expansion coefficient of the ceramic material or ceramic materials of the first and the second ceramic body,
wherein the composition C_{K} contains zirconium and titanium with (50+x) atom % of titanium and (50-x) atom % of zirconium, where x < 10, particularly x < 5, wherein the composition C_{K} is particularly present in the phase α-(Zr, Ti), wherein on at least one of the surfaces facing towards the ceramic body the active brazing solder has a limit layer with an average composition C_{G0}, wherein the composition C_{G0} has a liquid temperature T_{I}(C_{G0}) that is not less than 200 K below the liquid temperature T_{I}(C_{K0}) of the average composition C_{K0} of the core volume, wherein particularly C_{G0}:= (C_{G01}, ..., c_{G0N}), where |C_{G0}| = 1 and where the c_{G0i} are the stoichiometric parts of the components Ki i = 1, ..., N of the average composition of the active brazing solder in the limit layer; and
heating of the ceramic body and the active brazing solder in a vacuum solder process up to the melting of the composition C_{G0}, wherein the melt of the limit layer mixes with the material of the limit layer in the transition to the core area, as a result of which the liquid temperature of the limit layer increases such that the limit layer solidifies at least partially in an isothermal manner or becomes more viscous.

9. Procedure as claimed in Claim 8, wherein the provision of the active brazing solder involves the fact that a solder preform, which has the composition C_{K0}, is coated with a limit layer on at least one of the surfaces, preferably on two opposite surfaces, by means of vapor deposition, e.g. sputtering, wherein said limit layer has the composition C_{G0}.

10. Procedure as claimed in Claim 8 or 9, wherein the provision of the active brazing solder involves the fact that at least one surface section of a ceramic body, particularly two opposite surface sections of the two ceramic bodies, is/are coated with a limit layer which has the composition C_{G0}, wherein the coating is performed by vapor deposition, for example, particularly sputtering.

11. Procedure as claimed in Claim 10, wherein a solder preform is arranged between the ceramic bodies provided with the limit layer, wherein said preform has a core volume with the composition C_{K0}, and which, where necessary, is coated with a limit layer of the composition C_{G0}.

12. Procedure as claimed in one of the Claims 8 to 11, wherein the composition C_{G0} comprises 42 to 52 atom % of Zr, 23 to 28 atom % of Ni and 24 to 30 atom % of Ti, for example 45 to 49 atom % of Zr, 24.5 to 27 atom % of Ni and 26 to 29.5 atom % of Ti, and preferably 47 atom % of Zr, 26 atom % of Ni and 27 atom % of Ti.

## Revendications

1. Ensemble, comprenant : un premier corps en céramique (1) et un deuxième corps en céramique (2), le premier corps en céramique (1) et le deuxième corps en céramique (2) étant reliés au moyen d'un point d'assemblage, le point d'assemblage comprenant une brasure active,
le premier corps en céramique (1) et/ou le deuxième corps en céramique (2) comprenant de l'Al₂O₃,
la brasure active comportant du Zr, du Ni et du Ti,
la brasure active présentant, en moyenne sur un volume de noyau continu qui est distant du premier corps en céramique (1) et du deuxième corps en céramique (2) respectivement d'au moins 1 µm, notamment d'au moins 2 µm, une composition moyenne C_{K} avec une température de liquidus T_{I}(C_{K}),
où notamment C_{K} := (c_{K1}, ..., c_{KN}), où |C_{K}| = 1 et où les c_{Ki} sont les proportions stoechiométriques des composants Ki i = 1, ..., N de la composition moyenne de la brasure active dans le volume du noyau,
la composition C_{K} présentant un coefficient de dilatation thermique α(C_{K}), coefficient pour lequel s'applique la relation α(C_{K}) = m • α(K), où m ≤ 1,5 notamment m ≤ 1,3 et de préférence m ≤ 1,2, α(K) étant le coefficient de dilatation thermique moyen du matériau céramique ou des matériaux céramiques du premier et du deuxième corps en céramique,
la composition C_{K} contenant pour l'essentiel du zirconium et du titane, avec (50+x) % atomique de titane et (50-x) % atomique de zirconium, où x < 10, notamment x < 5, la composition C_{K} étant présente dans la phase α-(Zr, Ti),
le point d'assemblage comprenant une première couche limite (4) et une deuxième couche limite (5), qui sont respectivement adjacentes au premier corps en céramique et au deuxième corps en céramique,
**caractérisé en ce qu'**au moins l'une des couches limites, qui se trouve à l'extérieur du volume du noyau, présente une composition moyenne C_{G} avec une température de liquidus T_{I}(C_{G}) qui ne se situe pas à moins de 200 K en dessous de la température de liquidus T_{I}(C_{K}) de la composition moyenne C_{K} du volume du noyau,
où notamment C_{G} := (c_{G1}, ..., ,c_{GN}), où |C_{G}| = 1 et où les c_{Gi} sont les proportions stoechiométriques des composants Ki i = 1, ..., N de la composition moyenne de la brasure active dans la couche limite.

2. Ensemble selon la revendication 1, pour lequel l'au moins une couche limite présente une épaisseur non supérieure à 3 µm, notamment non supérieure à 2 µm et de préférence non supérieure à 1 µm.

3. Ensemble selon l'une des revendications précédentes, pour lequel la composition C_{G} présente une température de liquidus T_{I}(C_{G}) qui ne se situe pas à plus de 300 K, de préférence pas à plus de 150 K, et particulièrement de préférence pas à plus de 50 K au-dessus de la température de liquidus T_{I}(Cₑ) du point eutectique ou du point d'intersection le plus proche avec une courbe eutectique ayant une composition Cₑ dans la zone de composition,
où Cₑ := (cₑ₁, ..., _{CeN}), où ICel = 1, et où cₑᵢ est la proportion stoechiométrique des composants Ki avec i = 1, ..., N au point eutectique ou au point d'intersection le plus proche avec une courbe eutectique.

4. Ensemble selon l'une des revendications précédentes, pour lequel l'alliage du point d'assemblage présente une composition Cₑ au point eutectique ou au point d'intersection le plus proche avec une courbe eutectique dans la zone de composition,
où Cₑ := (cₑ₁, ..., _{CeN}), où ICel = 1 et où les cₑᵢ sont les proportions stoechiométriques des composants Ki avec i = 1, ..., N au point eutectique ou au point d'intersection le plus proche avec une courbe eutectique,
la différence entre la composition Cₑ et la composition C_{G} pouvant être décrite par un vecteur de différence normalisé D_{eG},
où : Cₑ = C_{G} + a_{eG} * D_{eG}, avec |D_{eG}| = 1,
la différence entre la composition C_{K} et la composition C_{G} pouvant être décrite par un vecteur de différence normalisé D_{KG},
où : C_{K} = C_{G} + a_{KG} * D_{KG}, avec |D_{KG}| = 1,
a_{eG} et a_{KG} étant des scalaires positifs,
la relation ci-dessous s'appliquant pour le produit scalaire s_{eK} := D_{eG} • D_{KG} :
s_{eK} < 0, notamment s_{eK} < -0,5, de préférence s_{eK} < -0,8.

5. Ensemble selon l'une des revendications précédentes, pour lequel la composition C_{K} présente un coefficient de dilatation thermique α(C_{K}) tel que α(C_{K}) ≤ 10 • 10⁻⁶/K, notamment α(C_{K}) ≤ 9,5 • 10⁻⁶/K, de préférence α(C_{K}) ≤ 9,2 • 10⁻⁶/K.

6. Ensemble selon l'une des revendications précédentes, pour lequel la couche limite (4, 5) présente une composition C_{G} qui comprend 42 à 52 % atomique de Zr, 23 à 28 % atomique de Ni et 24 à 30 % atomique de Ti, de l'Al étant éventuellement diffusé, la part de titane étant notamment réduite proportionnellement à la présence d'Al.

7. Cellule de mesure de pression, comprenant un ensemble selon l'une des revendications 1 à 6,
pour laquelle le premier corps en céramique forme un corps d'une membrane de mesure de la cellule de mesure de pression,
pour laquelle le deuxième corps en céramique forme un contre-corps de la cellule de mesure de pression, et
pour laquelle le contre-corps et la membrane de mesure sont assemblés l'un à l'autre de manière étanche à la pression au moyen du point d'assemblage, lequel est de forme annulaire.

8. Procédé destiné à la fabrication d'un ensemble selon l'une des revendications 1 à 6, lequel ensemble comprend un premier corps en céramique et un deuxième corps en céramique, le premier corps en céramique et le deuxième corps en céramique devant être liés par le procédé au moyen d'une brasure active, le premier corps en céramique (1) et/ou le deuxième corps en céramique (2) comprenant de l'Al₂O₃, la brasure active comprenant du Zr, du Ni et du Ti, lequel procédé comprend les étapes suivantes :
Préparation de la brasure active entre les corps en céramique, la brasure active présentant, en moyenne sur un volume de noyau contigu, une composition moyenne C_{K0} avec une température de liquidus T_{I}C_{K0}), où C_{K0} : = (cₖ₀₁, ..., CKON), où |C_{K0}| = 1 et où les c_{Ki} sont les proportions stoechiométriques des composants Ki i = 1, ..., N de la composition moyenne de la brasure active dans le volume du noyau, la composition C_{K} présentant un coefficient de dilatation thermique α(C_{K}), pour lequel on a :
α(C_{K}) = m • a(K), où m ≤ 1,5, notamment m ≤ 1,3 et de préférence m ≤ 1,2, α(K) étant le coefficient de dilatation thermique moyen du matériau céramique ou des matériaux céramiques du premier et du deuxième corps en céramique,
la composition C_{K} contenant du zirconium et du titane avec (50+x) % atomique de titane et (50-x) % atomique de zirconium, où x < 10, notamment x < 5, la composition C_{K} étant notamment présente dans la phase α-(Zr, Ti),
la brasure active présentant sur au moins l'une des surfaces faisant face au corps en céramique une couche limite avec une composition moyenne C_{G0}, la composition C_{G0} présentant une température de liquidus T_{I}(C_{G0}) qui ne se situe pas à moins de 200 K en dessous de la température de liquidus T_{I}(C_{K0}) de la composition moyenne C_{K0} du volume du noyau, avec notamment C_{G0} := (C_{G01}, ..., C_{G0N}), |C_{G0}| = 1 et les c_{G0i} étant les proportions stoechiométriques des composants Ki i = 1, ..., N de la composition moyenne de la brasure active dans la couche limite ; et
Chauffage des corps en céramique et de la brasure active dans un processus de brasage sous vide jusqu'à la fusion de la composition C_{G0}, la masse fondue de la couche limite se mélangeant au matériau de la couche limite dans la transition vers la zone du noyau, ce qui augmente la température de liquidus de la couche limite, de sorte que la couche limite se solidifie au moins partiellement de manière isotherme ou devient plus visqueuse.

9. Procédé selon la revendication 8, pour lequel la mise à disposition de la brasure active comprend le fait qu'une préforme à braser, laquelle présente la composition C_{K0}, est revêtue par dépôt en phase gazeuse, par exemple par pulvérisation, au moins sur une surface, de préférence sur deux surfaces opposées, d'une couche limite qui présente la composition C_{G0}.

10. Procédé selon la revendication 8 ou 9, pour lequel la mise à disposition de la brasure active comprend le fait qu'au moins une partie de surface d'un corps céramique, notamment deux parties de surface opposées des deux corps céramiques, est ou sont revêtues chacune d'une couche limite qui présente la composition C_{G0}, le revêtement étant effectué par exemple par dépôt en phase gazeuse, notamment par pulvérisation cathodique.

11. Procédé selon la revendication 10, pour lequel on dispose entre les corps céramiques pourvus de la couche limite une préforme à braser, laquelle préforme présente un volume de noyau avec la composition C_{K0}, et qui, le cas échéant, est revêtue d'une couche limite de la composition C_{G0}.

12. Procédé selon l'une des revendications 8 à 11, pour lequel la composition C_{G0} comprend de 42 à 52 % en atomes de Zr, de 23 à 28 % en atomes de Ni et de 24 à 30 % en atomes de Ti, par exemple de 45 à 49 % en atomes de Zr, de 24,5 à 27 % en atomes de Ni et de 26 à 29,5 % en atomes de Ti, et de préférence 47 % en atomes de Zr, 26 % en atomes de Ni et 27 % en atomes de Ti.
